# EUROPÄISCHE PATENTSCHRIFT

(11) **EP 0 528 758 B1**
(45) Veröffentlichungstag und Bekanntmachung des Hinweises auf die Patenterteilung: **03.01.1996**
(21) Anmeldenummer: 92810574.1
(22) Anmeldetag: 28.07.1992
(51) Int. Cl.: A47J 31/40

(54) **Vorrichtung zum Ausstossen von zu einem Kuchen gepresstem Kaffeepulver aus einer Brüheinrichtung einer Kaffeemaschine**
Device for the expulsion of the exhausted infusion substance from the brewing unit of a coffee machine
Dispositif pour expulser la pastille de café épuisée d'un ensemble d'infusion dans une machine à café

(30) Priorität: 30.07.1991 CH 2283/91
(43) Veröffentlichungstag der Anmeldung: 24.02.1993
(73) Patentinhaber: SINTRA HOLDING AG, CH-6210 Sursee (CH)
(72) Erfinder: Lüssi, André, CH-3084 Wabern (CH); Zurbuchen, Hans, CH-3084 Wabern (CH); von Gunten, Jürg, CH-3506 Grosshöchstetten (CH)
(74) Vertreter: Fischer, Franz Josef

(56) Entgegenhaltungen:
- EP-A- 0 217 198
- EP-A- 0 298 547
- DE-C- 4 002 415
- DE-U- 9 005 650
- FR-A- 2 562 782
- US-A- 3 369 478

## Beschreibung

Die vorliegende Erfindung bezieht sich auf eine Vorrichtung zum Ausstossen von zu einem Kuchen gepresstem Kaffeepulver aus einer Brüheinrichtung einer Kaffeemaschine gemäss dem Oberbegriff des Patentanspruches 1.

Das Zubereiten von Kaffee mit Kaffeemaschinen wird nach verschiedenen Verfahren ausgeführt, die sich in zwei Grundtypen unterscheiden lassen. Man unterscheidet einen ersten Verfahrenstyp, bei welchem das heisse Wasser einzig und allein infolge der Schwerkraft das in einem Filter befindliche Kaffeepulver durchläuft, von einem zweiten Verfahrenstyp, bei welchem das heisse Wasser unter Druck durch das Kaffeepulver gefördert wird (Espresso oder Druck-Brüh-Verfahren). Die vorliegende Erfindung bezieht sich insbesondere auf das zuletzt erwähnte Druck-Brüh-Verfahren. Zum automatischen Ausführen dieses Verfahrens sind bereits verschiedene Kaffeemaschinen bekannt. Es gibt solche, bei denen am Ende eines Brühvorganges das ausgelaugte Kaffeepulver zu einem Kuchen gepresst wird, welcher anschliessend aus der Brüheinrichtung entfernt werden muss. Dazu wird der Kaffeepulverkuchen vorerst mittels einem im Brühzylinder angeordneten, relativ zum letzteren längsverschiebbaren Kolben an ein Ende des Brühzylinders gefördert. Eine Vorrichtung zum Ausstossen wird anschliessend betätigt, um den Kaffeepulverkuchen von der Stirnseite des Kolbens abzustreifen und aus der Brüheinrichtung zu entfernen.

Wesentlich ist dabei, dass der oftmals an der Stirnfläche des Kolbens, welche üblicherweise mit einem Sieb versehen ist, anhaftende Kaffeepulverkuchen möglichst vollständig entfernt wird. Um dieses Ziel zu erreichen, sind mehr oder weniger aufwendig konstruierte Ausstossvorrichtungen bereits bekanntgeworden. Oftmals ist es erforderlich, das vollständige Entfernen des Kaffeepulverkuchens mittels einem Wasserstrahl oder mittels einer Bürste zu unterstützen.

In der Druckschrift FR-A-2 562 782 ist eine Ausstossvorrichtung offenbart, die sehr einfach aufgebaut ist. Ein abgewinkelter zweiarmiger Hebel ist am Gestell einer Kaffeemaschine schwenkbar gelagert. Einer der Hebelarme weist an seinem Ende ein Abstreifblech auf, welches beim Verschwenken des Hebels über das obere Ende des Brühzylinders führbar ist. Der andere Hebelarm tritt mit dem Gestänge eines Kurbeltriebes dann in Kontakt, wenn die Verschwenkbewegung ausgeführt werden soll. Nachteilig an der offenbarten Ausstossvorrichtung ist, dass die Abstreifplatte über dem flachen Brühzylinderende eine Kreisbahn mit einem Radius, der im wesentlichen der Länge des einen Hebels entspricht, beschreibt. Der Abstand zwischen der Abstreifplatte und der mit einem Sieb versehenen flachen Stirnseite des sich am Ende des Brühzylinders befindenden Kolbens ist beim Abstreifvorgang des Kaffeepulverkuchens unterschiedlich. Je nach Haftung des letzteren am Sieb wird dieser ganz oder nur teilweise entfernt.

Durch den Kurbeltrieb als Antriebselement ist die offenbarte Kaffeemaschine ebenfalls nicht geeignet, um unterschiedliche Kaffeepulvermengen zu verarbeiten. Dies wird jedoch von neuen Kaffeemaschinen gefordert. Bekannte Ausstossvorrichtungen bei Kaffeemaschinen, die diesen Vorteil aufweisen, sind jedoch komplizierter aufgebaut als die soeben beschriebene.

Es ist die Aufgabe der vorliegenden Erfindung, eine einfach konstruierte Vorrichtung zum Ausstossen von zu einem Kuchen gepresstem Kaffeepulver aus einer Brüheinrichtung einer Kaffeemaschine zu schaffen, mit welcher der Kaffeepulverkuchen vollständig aus der Brüheinrichtung entfernt werden kann und welche insbesondere für Kaffeemaschinen, die zu Verarbeiten unterschiedlicher Kaffeepulvermengen konstruiert sind, vorgesehen ist.

Die Lösung dieser Aufgabe erfolgt mit einer Ausstossvorrichtung, die die im kennzeichnenden Teil des Patentanspruches 1 aufgeführten Merkmale aufweist.

Vorteilhafte Ausbildungen sowie bevorzugte Ausführungen der erfindungsgemässen Ausstossvorrichtungen werden durch die Merkmale der abhängigen Patentansprüche umfasst.

Anhand von Figuren soll die Erfindung im folgenden beispielsweise näher erläutert werden. Es zeigen
**Fig. 1** einen von der Seite betrachteten teilweisen Längsschnitt durch eine in der Einfüllstellung dargestellte Brüheinrichtung mit einer erfindungsgemässen Ausstossvorrichtung,
**Fig. 2** eine Frontansicht der in der Fig. 1 gezeigten Brüheinrichtung,
**Fig. 3** einen von der Seite betrachteten teilweisen Längsschnitt durch die Brüheinrichtung in der Brühstellung,
**Fig. 4** einen von der Seite betrachteten teilweisen Längsschnitt durch die Brüheinrichtung in einer Stellung kurz vor dem Aktivwerden der Ausstossvorrichtung,
**Fig. 5** einen von der Seite betrachteten teilweisen Längsschnitt durch die Brüheinrichtung mit ausgeschwenktem Ausstossorgan, und
**Fig. 6** den in der Fig. 5 mit A bezeichneten Ausschnitt, dargestellt ohne Brühzylinder, Kolben und Spindel.

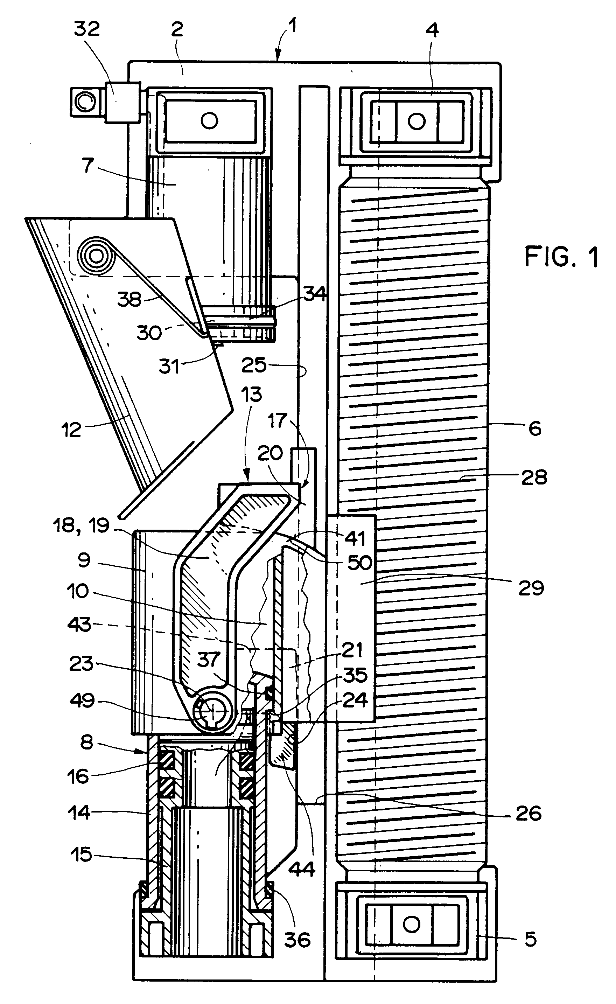

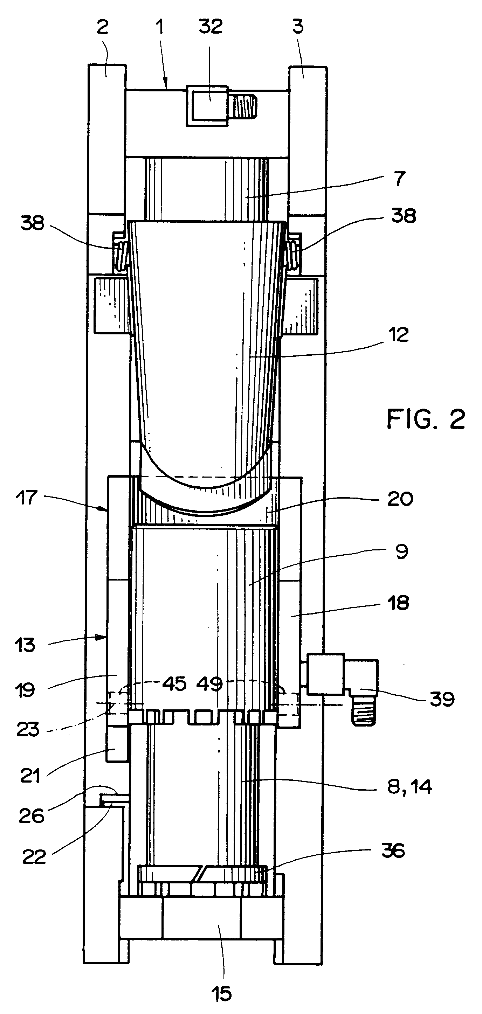

Die Fig. 1 und 2 zeigen eine Brüheinrichtung für eine Kaffeemaschine in einem von der Seite betrachteten teilweisen Längsschnitt (Fig. 1) und in einer Frontansicht (Fig. 2), je in der Ruhe- oder Einfüllstellung. In den Figuren sind die wesentlichen Funktionskomponenten der Brüheinrichtung sowie die erfindungsgemässe Ausstossvorrichtung dargestellt. Die Brüheinrichtung umfasst ein Gestell 1, das im wesentlichen durch eine erste und eine zweite Seitenwange 2, 3 gebildet ist, welche Seitenwangen durch entsprechende Distanzhaltemittel voneinander beabstandet sind. Als Distanzhaltemittel dienen u.a. ein oberes und ein unteres Spindellager 4, 5 einer sich längs über die ganze Einrichtung erstreckenden Antriebsspindel 6. Die letztere ist in den Spindellagern drehbar gelagert und gegen ein axiales Verschieben gesichert. An der Antriebsspindel 6 ist ein vorzugsweise mehrgängiges Spindelgewinde 28 angebracht. Beabstandet zur vertikalen Antriebsspindel 6 ist ein Brühzylinder 9 längs zur ersteren verschiebbar gehalten. Der Brühzylinder 9 besitzt eine Durchgangsbohrung 10, deren Achse parallel zu Achse der Antriebsspindel 6 verläuft. Mit dem Brühzylinder fest verbunden ist ein Mitnahmeorgan 29, das sich zur Antriebsspindel hin erstreckt. Dieses ist im wesentlichen plattenförmig ausgeführt, wobei die der Antriebsspindel 6 zugewandte Seite Teilgewindegänge umfasst, die mit dem Spindelgewinde 28 in Eingriff stehen. Das Mitnahmeorgan ist seitlich durch nicht dargestellte Führungsmittel geführt. Durch das Drehen der Antriebsspindel 6 in der einen oder anderen Richtung wird der Brühzylinder 9 nach oben oder nach unten verschoben.

Fest mit dem Gestell 1 verbunden ist ein erster oder oberer Kolben 7. Seine dem Brühzylinder 9 zugewandte Stirnseite ist mit einem demontierbaren Sieb 30 versehen, welches mittels einem Befestigungsclip 31 gehalten ist. Ein Dichtring 34 ist dazu bestimmt, den oberen Kolben 7 gegenüber der Innenwandung der Bohrung 10 des Brühzylinders 9 flüssigkeitsdicht abzudichten. Ein am oberen Kolben angeordneter Anschlussnippel 32 ist zum Abführen des Kaffees bestimmt. Der Anschlussnippel 32 ist über eine Leitung 33 mit der dem Brühzylinder 9 abgewandten Seite des Siebes 30 verbunden. Das dem Anschlussnippel 32 nähere Ende des oberen Kolbens 7 ist seitlich erweitert und dient zur Distanzhaltung der beiden genannten Seitenwangen 2, 3.

In der Bohrung 10 des Brühzylinders 9 ist ein zweiter oder unterer Kolben 8 angeordnet, welcher im wesentlichen längs des ganzen Brühzylinders 9 verschiebbar ist. Der untere Kolben 8 weist eine bombierte Stirnfläche 42 und einen hohlzylinderförmigen Schaft 14 auf, der sich vom Brühzylinder 9 weg nach unten erstreckt. Die Verschiebebewegung des unteren Kolbens 8 innerhalb der Bohrung 10 des Brühzylinders 9 ist durch obere Anschlagsmittel 35 und durch untere Anschlagsmittel 36, welche sich am oberen bzw. am unteren Ende des Schaftes 14 befinden, begrenzt. Der untere Kolben 8 besitzt ebenfalls einen Dichtring 37 mit einer entsprechenden bereits vorgenannten Bestimmung. Koaxial zur Bohrung 10 bzw. zum unteren Kolben 8 ist ein hohlzylinderförmiger Stutzen 15 vorhanden. Sein dem Brühzylinder 9 abgewandtes Ende ist seitlich erweitert und dient ebenfalls als Distanzhaltemittel für die bereits genannten Seitenwangen 2, 3. Der hohlzylinderförmige Schaft 14 des unteren Kolbens 8 ist über den Stutzen 15 schiebbar. O-Ringe 16, die auf dem Stutzen in entsprechenden Nuten positioniert sind, sorgen dafür, dass die Verschiebebewegung des unteren Kolbens 8 relativ zum Stutzen 5 gehemmt oder gebremst ist.

Ein zweiter Anschlussnippel 39 dient zum Zuführen von heissem, unter Druck stehendem Wasser in die Bohrung 10 des Brühzylinders 9.

Im oberen Endbereich zwischen den beiden Seitenwangen 2, 3 ist ein Trichter 12 zum Einfüllen von Kaffeepulver in den Brühzylinder 9 schwenkbar gelagert. Federn 38 sorgen für die eingeschwenkte Ruhelage des Trichters 12.

In der in den Fig. 1 und 2 gezeigten Einfüllstellung ist das eine oder obere Ende 41 des Brühzylinders 9 von der dem letzteren zugewandten Stirnseite des oberen Kolbens 7 beabstandet.

Die erfindungsgemässe Vorrichtung zum Ausstossen von zu einem Kuchen gepresstem Kaffeepulver aus der Brüheinrichtung ist mit 13 bezeichnet. Die Vorrichtung umfasst ein Ausstossorgan 17, welches am Brühzylinder 9 schwenkbar befestigt ist sowie eine Nase 22, welche im unteren Endbereich der ersten Seitenwange 2 des Gestells 1 angeordnet ist. Das Ausstossorgan 17 umfasst zwei Schwenkhebel 18, 19, welche sich je seitlich des Brühzylinders 9 im wesentlichen in Längsrichtung zu diesem erstrecken. Sie sind an je einem Lagerzapfen 49, die sich im unteren Endbereich des Brühzylinders 9 je seitwärts nach aussen erstrecken, schwenkbar gelagert. Die Schwenkachse, die rechtwinklig zur Achse des Brühzylinders 9 verläuft, ist mit dem Bezugszeichen 23 gekennzeichnet. Eine bevorzugte Ausführung sieht vor, dass die Schwenkachse 23 die Achse des Brühzylinders 9 schneidet.

Die der Schwenkachse 23 abgewandten Enden der Schwenkhebel 18, 19 sind über eine Ausstossplatte 20 miteinander verbunden. Diese erstreckt sich rechtwinklig zu den Schwenkhebeln über das obere Ende 41 des Brühzylinders 9. Eine dem genannten Ende des Brühzylinders 9 zugewandte Gleitfläche 50 der Ausstossplatte 20 weist eine Wölbung auf, die dem Schwenkradius entspricht. Das obere Ende 41 des Brühzylinders 9 weist eine gleich grosse Wölbung auf.

An einem der Schwenkhebel 19, der in der Fig. 1 nicht sichtbar ist, ist im Bereich der Schwenkachse 23 ein erstes Betätigungsmittel 21 angeordnet. Dieses umfasst u.a. ein erstes Sperrmittel 24 und besteht im wesentlichen aus einem L-förmigen Fortsatz. Ein erster Schenkel 43 des Fortsatzes 21 verläuft im wesentlichen rechtwinklig zum Schwenkhebel 19. An dem dem einen Schwenkhebel 19 abgewandten Ende des ersten Schenkels 43 ist ein im wesentlichen parallel zum Schwenkhebel 19 sich erstreckender zweiter Schenkel 44 angeordnet. Die nach unten weisende Fläche des ersten Schenkels 43 ist mit dem Bezugszeichen 45 als Betätigungsfläche bezeichnet. Sie ist zum Zusammenwirken mit der Nase 22 als zweitem Betätigungsmittel bestimmt. Die dem einen Schwenkhebel 19 abgewandte Seite des zweiten Schenkels 44 wird in der Folge Sperrfläche 24 genannt. In denjenigen Stellungen des Brühzylinders 9, in denen ein Ausschwenken des Ausstossorganes 17 aus der in der Fig. 1 gezeigten Stellung nicht vorgesehen ist, gleitet die Sperrfläche 24 einer Anschlagsbahn 25, welche ein zweites Sperrmittel bildet, im wesentlichen anliegend entlang. Ein Ausschwenken des Ausstossorganes 17 wird dadurch verhindert. Ein solches ist nur dann möglich, wenn die Sperrfläche 24 das untere Ende 26 der Anschlagsbahn 25 zumindest teilweise nach unten überragt.

Nachdem nun die wesentlichsten Komponenten der Brüheinrichtung einerseits und insbesondere der erfindungsgemässen Ausstossvorrichtung andererseits beschrieben worden sind, wird in der Folge die Funktionsweise der letzteren erklärt.

Dazu gehen wir von der in der Fig. 1 dargestellten Einfüllstellung aus. Eine bestimmte Menge Kaffeepulver wird durch den Trichter 12 in die Bohrung 10 des Brühzylinders 9 eingefüllt. Das Ausstossorgan 17 befindet sich in einer eingeschwenkten Stellung. Es ist durch die Sperrfläche 24, die an der Anschlagsbahn 25 anliegt, am Ausschwenken gehindert. Die Antriebsspindel 6 wird in Rotation versetzt, derart, dass sich das Mitnahmeorgan 29 mit dem Brühzylinder 9 nach oben verschiebt. Der untere Kolben 8 wird dabei durch die oberen Anschlagsmittel 35 mitgeschleppt.

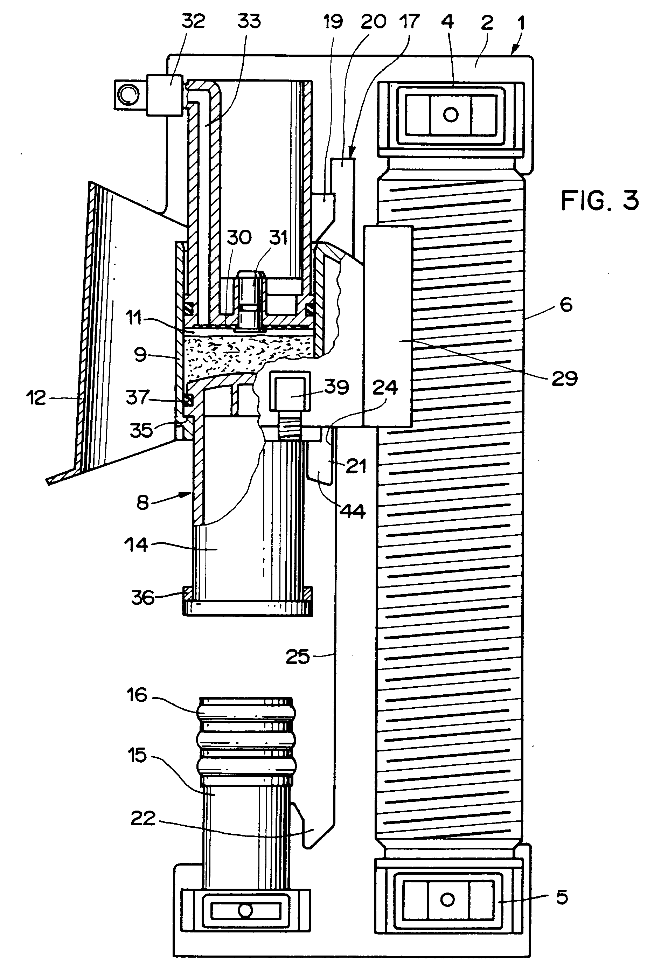

Das eine obere Ende des Brühzylinders 9 schiebt sich bei fortgesetzter Aufwärtsbewegung des letzteren über den oberen Kolben 7. Innerhalb des Brühzylinders wird dadurch die Brühkammer 11 gebildet. Nachdem die Aufwärtsbewegung gestoppt worden ist, gelangt unter Druck stehendes heisses Wasser über den zweiten Anschlussnippel 39 in die Brühkammer 11. Das Kaffeepulver wird vom Wasser durchspült, wobei Kaffee entsteht, der durch das Sieb 30 über die Leitung 33 und den ersten Anschlussnippel 32 die Brüheinrichtung verlässt. Diese kurz geschilderte Brühstellung ist in der Fig. 3 dargestellt. Es ist dabei zu beachten, dass in dieser Stellung der Schaft 14 des unteren Zylinders 8 vom Stutzen 15 abgehoben worden ist. Der Trichter 12 ist bei der Aufwärtsbewegung des Brühzylinders 9 nach aussen verschwenkt worden.

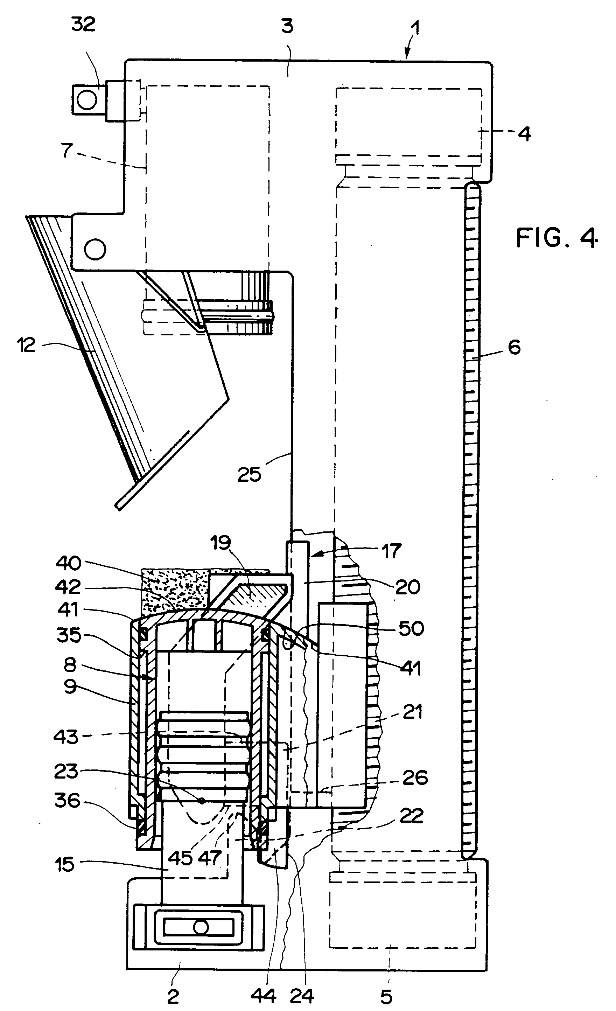

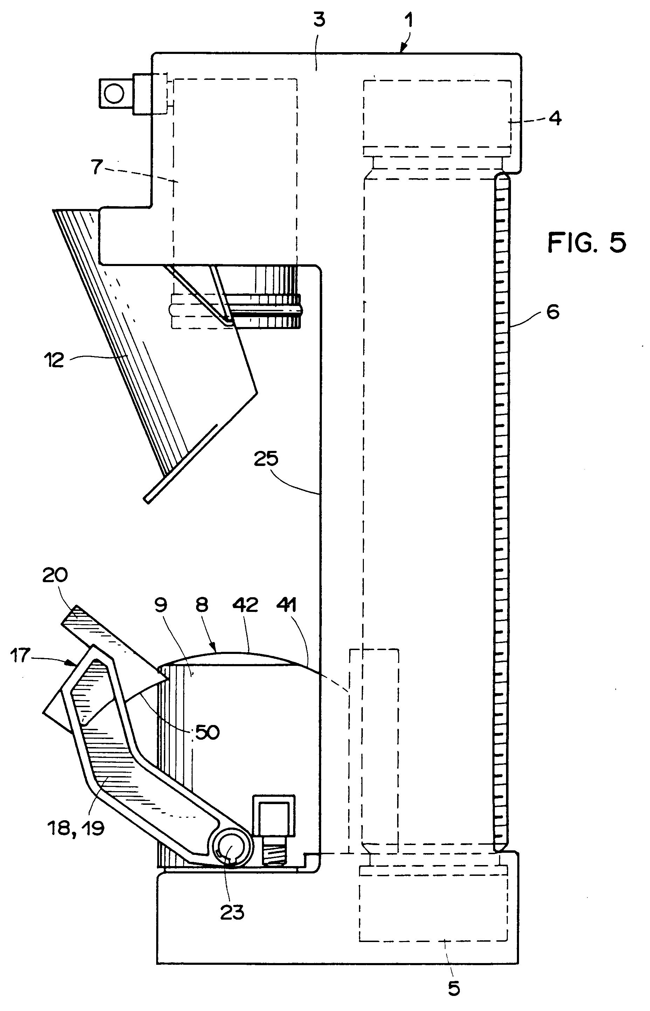

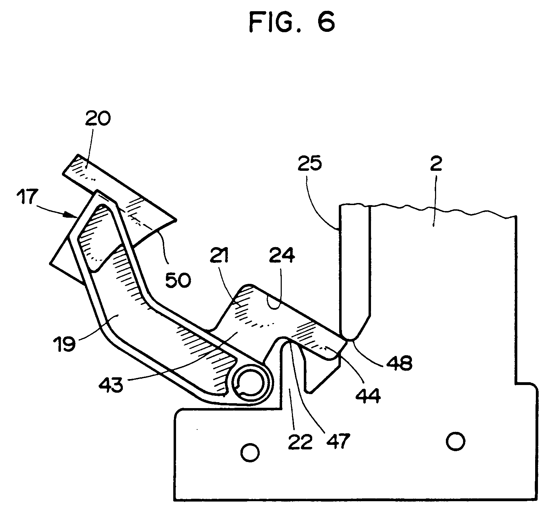

Nachdem das ausgelaugte Kaffeepulver ausgepresst worden ist, wird die Antriebsspindel 6 erneut in Rotation versetzt - diesmal in umgekehrter Richtung - wodurch der Brühzylinder 9 nach unten bewegt wird. Der untere Kolben 8 verbleibt vorerst in der in der Fig. 3 gezeigten Stellung innerhalb des Brühzylinders 9. Dies infolge der Reibung des Dichtringes 37 und der Haftung des zu einem Kuchen gepressten Kaffeepulvers. Irgendwann im Verlaufe der Abwärtsbewegung des Brühzylinders 9 läuft das unter Ende des Schaftes 14 auf das obere Ende des Stutzens 15 auf. Die O-Ringe 16 hemmen oder verlangsamen dabei infolge ihrer Reibwirkung die abwärts gerichtete Bewegung des unteren Kolbens 8 relativ zur Abwärtsbewegung des Brühzylinders 9. Dadurch entsteht eine relative Aufwärtsbewegung des unteren Kolbens 8 innerhalb der Bohrung 10 relativ zum Brühzylinder 9. Bei fortgesetzter Abwärtsbewegung des Brühzylinders 9 wird eine im wesentlichen in der Fig. 4 dargestellte Stellung erreicht. Die nach oben gewölbte Stirnfläche 42 des unteren Kolbens 8 steht dabei mit ihrem Rand bündig zum ebenfalls gewölbten oberen Ende 41 des Brühzylinders 9. Der Kaffeepulverkuchen 40 liegt auf der Stirnfläche 42 auf. Er befindet sich vollkommen ausserhalb des Brühzylinders 9. Diese Stellung wird erreicht, bevor die Betätigungsfläche 45 des ersten Schenkels 43 an dem nach oben gerichteten Ende 47 der Nase 22 auftrifft. Die Sperrfläche 24 des zweiten Schenkels 44 überragt dabei das untere Ende 26 der Anschlagsbahn 25 mindestens teilweise nach unten. In der in der Fig. 4 gezeigten Stellung werden nun die unteren Anschlagsmittel 36 wirksam. Der untere Kolben 8 kann sich gegenüber dem Brühzylinder 9 nicht mehr weiter nach oben verschieben. Beim weiteren Abwärtsbewegen des Brühzylinders 9 ist die Bewegungsgeschwindigkeit des letzteren und des unteren Kolbens 8 wieder gleich derjenigen des Brühzylinders. Die Betätigungsfläche 45 des einen Schenkels 43 gelangt schlussendlich in Kontakt mit dem oberen Ende 47 der Nase 22. Durch die weitere Abwärtsbewegung wird dadurch das Ausstossorgan 17 nach aussen verschwenkt, wie dies in den Fig. 5 und 6 dargestellt ist.

Der Kaffeepulverkuchen ist von der bombierten Stirnfläche 42 des unteren Kolbens 8 sauber entfernt worden. Dadurch, dass nicht nur das obere Ende 41 des Brühzylinders 9 eine Wölbung aufweist, die einer Bahn entspricht, die von der Gleitfläche 50 der Ausstossplatte 20 beim Ausschwenken des Ausstossorganes 17 beschrieben wird, sondern weil auch die bombierte Stirnfläche 42 des unteren Kolbens 8 dieser Bahn folgt, wobei die Gleitfläche 50 im wesentlichen ohne nennenswerten Zwischenraum über die Stirnfläche 42 gleitet, bleiben praktisch keine Kaffeepulverrückstände auf der Stirnfläche 42 des unteren Kolbens 8 zurück. Ein weiteres Reinigen erübrigt sich.

Das Einschwenken des Ausstossorganes 17 in die Ruhestellung erfolgt dadurch, dass beim anschliessenden Aufwärtsbewegen des Brühzylinders 9 das untere Ende 48 der Anschlagsbahn 25 als weiteres Betätigungsmittel auf die Sperrfläche 24 drückt, wodurch das Ausstossorgan eingeschwenkt wird und die Sperrfläche 24 schlussendlich wieder benachbart zur Anschlagsbahn 25 im wesentlichen zum Anliegen kommt. Die in der Fig. 1 beschriebene Einfüllstellung wird wieder erreicht. Die Nase 22 und die Anschlagsbahn verlaufen in Längsrichtung der Brüheinrichtung versetzt parallel zueinander. Das obere Ende 47 der Nase überlappt dabei das untere Ende 48 der Anschlagsbahn 25 nicht.

Abschliessend sei erwähnt, dass mit der gezeigten Brüheinrichtung, die ohne Kurbeltrieb angetrieben wird, es ohne weiteres möglich ist, verschiedene Kaffeepulvermengen zu verarbeiten. Der Brühzylinder 9 braucht dazu lediglich unterschiedlich weit nach oben bewegt zu werden.

## Patentansprüche

1. Vorrichtung zum Ausstossen von zu einem Kuchen gepresstem Kaffeepulver aus einer Brüheinrichtung einer Kaffeemaschine mit einem Gestell (1), einem Brühzylinder (9), der eine zylindrische Bohrung (10) aufweist, zwei Kolben (7, 8), durch welche die Bohrung (10) zum Bilden einer Brühkammer (11) abschliessbar ist, wobei der Brühzylinder (9) und die Kolben (7, 8) relativ zueinander in der Brühzylinderachse verschiebbar sind, und wobei ein erster Kolben (7) relativ zum Brühzylinder (9) derart bewegbar ist, dass das eine Ende (41) des Brühzylinders von der dem Brühzylinder zugewandten Stirnseite des ersten Kolbens (7) beabstandet ist, während ein zweiter Kolben (8) relativ zum Brühzylinder (9) zum Ausstossen des Kaffeepulverkuchens (40) mindestens bis zum genannten einen Ende (41) bewegbar ist, dadurch gekennzeichnet, dass der erste Kolben (7) fest mit dem Gestell (1) verbunden ist, dass der Brühzylinder (9) längs einer Antriebsspindel (6) bewegbar ist, dass ein Ausstossorgan (17) am Brühzylinder (9) angeordnet und um eine Achse (23), die rechtwinklig zur Brühzylinderachse verläuft, schwenkbar ist, dass die Schwenkachse (23) in der Nähe des dem einen Ende (41) abgewandten Endes des Brühzylinders (9) angeordnet ist, und dass das eine Ende des Brühzylinders (9) sowie die Stirnseite des zweiten Kolbens (8) je eine Wölbung (41, 42) aufweisen, welche der vom Ausstossorgan (17) beschriebenen Schwenkbahn entspricht.

2. Vorrichtung nach Anspruch 1, dadurch gekennzeichnet, dass die Schwenkachse (23) die Achse des Brühzylinders (9) schneidet.

3. Vorrichtung nach Anspruch 1 oder 2, dadurch gekennzeichnet, dass Mittel (21, 22) zum Betätigen des Ausstossorganes (17) vorhanden sind, sobald der zweite Kolben (8) in den Bereich des einen Endes (41) des Brühzylinders (9) verschoben worden ist, und dass Sperrmittel (24, 25) zum Verhindern eines Ausschwenkens des Ausstossorganes (17) ausserhalb des genannten Bereiches vorhanden sind.

4. Vorrichtung nach einem der Ansprüche 1 bis 3, dadurch gekennzeichnet, dass das Ausstossorgan (17) mindestens einen Schwenkhebel (18, 19) umfasst, der sich von der Schwenkachse (23) bis zum einen Ende (41) des Brühzylinders (9) wegerstreckt und dass an dem der Schwenkachse (23) abgewandten Ende des Schwenkhebels (18, 19) eine Ausstossplatte (20) angeordnet ist, die sich über eine Distanz, die im wesentlichen dem Durchmesser der Bohrung (10) des Brühzylinders (9) entspricht, rechwinklig zum Schwenkhebel (18, 19) über den Brühzylinder (9) erstreckt.

5. Vorrichtung nach Anspruch 4, dadurch gekennzeichnet, dass der in den Bereich des einen Endes (41) verschiebbare zweite Kolben (8) eine bombierte Stirnfläche (42) aufweist, wobei der Bombierungsradius im wesentlichen dem Schwenkradius der dem zweiten Kolben zugewandten Seite (50) der Ausstossplatte (20) entspricht.

6. Vorrichtung nach einem der Ansprüche 3 bis 5, dadurch gekennzeichnet, dass ein erstes Betätigungsmittel (21) und ein erstes Sperrmittel (24) ein im wesentlichen L-förmiger Fortsatz ist, welcher nahe der Schwenkachse (23) am Schwenkhebel (19) angeordnet ist, dass der erste Schenkel (43) des Fortsatzes (21) im wesentlichen rechtwinklig zum Schwenkhebel (19) verläuft und eine Betätigungsfläche (45) aufweist und dass der zweite Schenkel (44) an dem dem Schwenkhebel (19) abgewandten Ende des ersten Schenkels (43) angeordnet ist und im wesentlichen parallel zum Schwenkhebel (19) verläuft und eine Sperrfläche (24) umfasst.

7. Vorrichtung nach Anspruch 6, dadurch gekennzeichnet, dass ein zweites Betätigungsmittel (22) eine am Gestell (1) angeordnete Nase ist, die sich im wesentlichen parallel zum zweiten Schenkel (44) verlaufend, gegen die Betätigungsfläche (45) des ersten Schenkels (43) erstreckt und zum Ausschwenken des Ausstossorganes (17) auf den ersten Schenkel einwirkbar ist.

8. Vorrichtung nach Anspruch 7, dadurch gekennzeichnet, dass eine sich längs dem Gestell (1) erstreckende und parallel zur Achse des Brühzylinders (9) verlaufende Anschlagsbahn (25) vorhanden ist, dass sich die Anschlagsbahn (25) nahezu über die ganze Länge des Verschiebebereiches des Brühzylinders (9) erstreckt und ein zweites Sperrmittel bildet, indem beim Bewegen des Brühzylinders (9) längs der Anschlagsbahn (25) die Sperrfläche (24) des zweiten Schenkels (44) zum Verhindern eines Ausschwenkens des Ausstossorganes (17) an der Anschlagsbahn (25) im wesentlichen anliegend entlang gleitet.

9. Vorrichtung nach Anspruch 8, dadurch gekennzeichnet, dass die Anschlagsbahn (25) parallel zur Nase (12), jedoch in Längsrichtung versetzt zur letzteren verläuft, wobei sich das der Anschlagsbahn (25) zugewandte Ende (47) der Nase (22) und das der Nase (22) zugewandte Ende (48) der Anschlagsbahn (25) nicht überlappen.

10. Vorrichtung nach Anspruch 9, dadurch gekennzeichnet, dass das genannte Ende (48) der Anschlagsbahn (25) ein weiteres Betätigungsmittel bildet, das zum Einschwenken des ausgeschwenkten Ausstossorganes (17) bestimmt ist.

## Claims

1. Device for ejection of ground coffee pressed into a cake from a brewing apparatus of a coffee machine having a frame (1), a brewing cylinder (9) which has a cylindrical bore (10), two pistons (7, 8) by which the bore (10) is closable for forming a brewing chamber (11), the brewing cylinder (9) and the pistons (7, 8) being displaceable relative to one another in the brewing cylinder axis, and a first piston (7) being movable relative to the brewing cylinder (9) in such a way that one end (41) of the brewing cylinder is spaced from the face of the first piston (7) facing the brewing cylinder, while a second piston (8) is movable relative to the brewing cylinder (9) at least up to the said one end (41) for ejecting the cake (40) of ground coffee, characterized in that the first piston (7) is fixed to the frame (1), that the brewing cylinder (9) is movable along a driving spindle (6), that an ejection part (17) is disposed on the brewing cylinder (9) and is swivelable about an axis (23) which runs at right angles to the brewing cylinder axis, that the swivel axis (23) is disposed near the end of the brewing cylinder (9) remote from the one end (41), and that the one end of the brewing cylinder (9), as well as the face of the second piston (8), each have a curvature (41, 42) which corresponds to the swivel path described by the ejection part (17).

2. Device according to claim 1, characterized in that the swivel axis (23) intersects the axis of the brewing cylinder (9).

3. Device according to claim 1 or 2, characterized in that there are means (21, 22) for actuating the ejection part (17) as soon as the second piston (8) has been displaced into the region of the one end (41) of the brewing cylinder (9), and that there are locking means (24, 25) for preventing a swinging-out of the ejection part (17) outside of the said region.

4. Device according to one of the claims 1 to 3, characterized in that the ejection part (17) comprises at least one rocking lever (18, 19) which extends away from the swivel axis (23) up to the one end (41) of the brewing cylinder (9), and that disposed at the end of the rocking lever (18, 19) remote from the swivel axis (23) is an ejection plate (20) which extends over the brewing cylinder (9) at right angles to the rocking lever (18, 19) for a distance that substantially corresponds to the diameter of the bore (10) of the brewing cylinder (9).

5. Device according to claim 4, characterized in that the second piston (8) displaceable into the region of the one end (41) has a cambered face (42), the camber radius substantially corresponding to the swivel radius of the side (50) of the ejection plate (20) facing the second piston.

6. Device according to one of the claims 3 to 5, characterized in that a first actuating means (21) and a first locking means (24) is a substantially L-shaped extension which is disposed on the rocking lever (19) near the swivel axis (23), that the first leg (43) of the extension (21) runs substantially at right angles to the rocking lever (19) and has an actuating surface (45), and that the second leg (44) is disposed at the end of the first leg (43) remote from the rocking lever (19) and runs substantially parallel to the rocking lever (19) and comprises a locking surface (24).

7. Device according to claim 6, characterized in that a second actuating means (22) is a nose disposed on the frame (1), which nose, running substantially parallel to the second leg (44), extends toward the actuating surface (45) of the first leg (43) and is capable of influencing the first leg for swinging out the ejection part (17).

8. Device according to claim 7, characterized in that there is a stop path (25) extending along the frame (1) and running parallel to the axis of the brewing cylinder (9), that the stop path (25) extends over nearly the entire length of the displacement range of the brewing cylinder (9) and forms a second locking means in that, upon moving of the brewing cylinder (9) along the stop path (25), the locking surface (24) of the second leg (44) slides along on the stop path (25) substantially snugly for preventing swinging-out of the ejection part (17).

9. Device according to claim 8, characterized in that the stop path (25) runs parallel to the nose (22) but in longitudinal direction staggered relative to the latter, the end (47) of the nose (22) facing the stop path (25) and the end (48) of the stop path (25) facing the nose (22) not overlapping.

10. Device according to claim 9, characterized in that the said end (48) of the stop path (25) forms a further actuating means which is intended for retracting the swung-out ejection part (17).

## Revendications

1. Dispositif d'évacuation de poudre de café pressée sous forme de gâteau hors du dispositif d'infusion d'une machine à café comprenant un bâti (1), un cylindre d'infusion (9) présentant une ouverture cylindrique (10), deux pistons (7, 8) permettant de fermer l'ouverture (10) de manière à constituer une chambre d'infusion (11), le cylindre d'infusion (9) et les pistons (7, 8) étant mobiles les uns par rapport aux autres dans l'axe du cylindre d'infusion, un premier piston (7) étant déplaçable par rapport au cylindre d'infusion (9) en sorte qu'une extrémité (41) du cylindre d'infusion est distante de la face frontale du premier piston (7) proche du cylindre d'infusion, tandis qu'un deuxième piston (8) peut être déplacé par rapport au cylindre d'infusion (9) au moins jusqu'à ladite extrémité (41) pour évacuer le gâteau de poudre de café (40), caractérisé en ce que le premier piston (7) est fixé solidairement au bâti (1), en ce que le cylindre d'infusion (9) est déplaçable le long d'une vis d'entraînement (6), en ce qu'un organe d'évacuation (17) est placé contre le cylindre d'infusion (9) et peut être incliné autour d'un axe (23) perpendiculaire à l'axe du cylindre d'infusion, en ce que l'axe d'inclinaison (23) est situé à proximité de l'extrémité du cylindre d'infusion (9) opposée à ladite extrémité, et en ce que l'extrémité du cylindre d'infusion (9) ainsi que la surface frontale du deuxième piston (8) présentent chacune une bombure (41, 42) correspondant à la trajectoire décrite par l'organe d'évacuation (17).

2. Dispositif selon la revendication 1, caractérisé en ce que l'axe d'inclinaison (23) coupe l'axe du cylindre d'infusion (9).

3. Dispositif selon l'une des revendications 1 ou 2, caractérisé par des moyens (21, 22) prévus pour actionner l'organe d'évacuation (17) dès que le deuxième piston (8) est déplacé dans la région de l'une des extrémités (41) du cylindre d'infusion (9), et en ce que des moyens de blocage (24, 25) sont prévus pour éviter une inclinaison de l'organe d'évacuation (17) en dehors de ladite région.

4. Dispositif selon l'une des revendications 1 à 3, caractérisé en ce que l'organe d'évacuation (17) comporte au moins un levier inclinable (18, 19) s'étendant depuis l'axe d'inclinaison (23) jusqu'à l'une des extrémités (41) du cylindre d'infusion (9), et en ce qu'une plaque d'évacuation (20) est placée contre l'extrémité du lever inclinable (18, 19) opposée à l'axe d'inclinaison (23) et correspond approximativement au diamètre de l'ouverture (10) du cylindre d'infusion (9), s'étendant perpendiculairement au levier inclinable par dessus le cylindre d'infusion (9).

5. Dispositif selon la revendication 4, caractérisé en ce que le deuxième piston mobile (8) présente dans la région d'une des extrémités (41) une surface frontale bombée (42), le rayon de bombage correspondant approximativement au rayon d'inclinaison de la face (50) de la plaque d'évacuation (20) tournée contre le deuxième piston.

6. Dispositif selon l'une des revendications 3 à 5, caractérisé en ce qu'un premier moyen d'actionnement (21) et un premier moyen de blocage (24) sont formés par une pièce pour l'essentiel en forme de L, placée à proximité de l'axe d'inclinaison (23) contre le levier inclinable (19) et en ce que le premier brin (43) de la pièce (21) est approximativement perpendiculaire au lever inclinable (19) et présente une surface d'actionnement (45) et en ce que le deuxième brin (44) est placé contre l'extrémité du premier brin opposée au levier inclinable (43), s'étendant approximativement parallèlement au levier inclinable (19) et comprenant une surface de blocage (24).

7. Dispositif selon la revendication 6, caractérisé en ce qu'un deuxième moyen d'actionnement (22) est constitué par un nez formé sur le bâti (1) s'étendant approximativement parallèlement au deuxième brin (44) et contre la surface d'actionnement (45) du premier brin (43) et pouvant opérer pour incliner l'organe d'évacuation (17) sur le premier brin.

8. Dispositif selon la revendication 7, caractérisé par une surface de butée (25) s'étendant le long du bâti (1) parallèlement à l'axe du cylindre d'infusion (9), la surface de butée (25) s'étendant pratiquement sur toute la longueur de la région mobile du cylindre d'infusion (9) et constituant un deuxième moyen de blocage, la surface de blocage (24) du deuxième brin (44) glissant lors du déplacement du cylindre d'infusion (9) le long de la surface de butée (25) de manière pratiquement adjacente pour éviter l'inclination de l'organe d'évacuation (17) contre la surface de butée (25).

9. Dispositif selon la revendication 8, caractérisé en ce que la surface de butée (25) s'étend parallèlement au nez (22), mais est cependant décalée par rapport à celui-ci dans la direction longitudinale, l'extrémité (47) du nez (22) proche de la surface de butée (25) et l'extrémité (48) de la surface de butée (25) proche du nez (22) ne se recouvrant pas.

10. Dispositif selon la revendication 9, caractérisé en ce que ladite extrémité (48) de la surface de butée (25) forme un autre moyen d'actionnement destiné à incliner vers l'intérieur l'organe d'évacuation (17) incliné vers l'extérieur.
